# EUROPEAN PATENT APPLICATION

(11) **EP 4 283 486 A1**
(43) Date of publication of application: **29.11.2023**
(21) Application number: 22174892.4
(22) Date of filing: 23.05.2022
(51) Int. Cl.: G06F 16/25

(54) **STORING HIGH VOLUME, LOW FREQUENCY INGEST TIME SERIES DATA AND RETRIEVING SAME WITH SUB-SECOND LATENCIES**

(71) Applicant: Siemens Energy Global GmbH & Co. KG, 81739 München (DE)
(72) Inventor: Fige, Peter, 80687 München (DE)

(57) **Abstract**

The invention utilizes several services that combined bring time-series data in a format that allows extremely efficient querying. This is enabled by:
- A scalable ingest process
- Constant file-maintenance to keep the service efficient
- Pre-aggregation
- Efficient storage format
- Immutable files to enable efficient caching

Advantage: Providing the data on-demand with low latencies; adding more data to the service does not influence the performance.

## Description

The present invention relates to a method for storing high volume, low frequency ingest time series data and retrieving same with sub-second latencies.

Time series data is necessary for many analytical and data science use-cases in IoT (Internet of Things) applications. Applications need to access large amounts of time series data efficiently from both latency and cost perspective: data must be available on-demand quickly and the ongoing cost of storing and serving the data must be kept low.

High volume - low frequency ingest time series data is a special kind of time series data, where large amounts of data are stored and ingested but the data is ingested in large chunks once or a few times a day. An example for this is sensor readings of large gas turbines:
- There are over 5 trillion sensor readings that span 1000 gas turbines and up to 20 years,
- Every day over 5 billion readings are ingested (the data itself can be very high frequency),
- But each gas turbine uploads its data only once per day, so the number of data ingests per day is low.

The data needs to be made available for consuming applications either for analytical processing or for visualizations. Providing the data on-demand with low latencies is important. Especially visualization use-cases demand sub-second latencies for retrieving data. Typical time-series related operations like aggregations or unit-of-measurement conversion are relevant to all applications consuming the data, and so these should be handled by the time series storage. Certain time-series meta-data, like list of time series, last reading, time interval of readings, etc... is also relevant to applications. Such meta-data must be also made available efficiently.

Storing such a large amount of time series data has been historically very challenging, resulting in solutions that are either too slow, too expensive or often both:
- On the now defunct IDA platform, data was stored in Hadoop and was queried with Hive. This resulted in a very expensive on-premise solution with on-demand access times of up to 30 minutes.
- Traditional OLTP (Online Transaction Processing) data bases like Postgres, MSSql, etc... do not scale well to the large amount of data and the high volume of ingest. Even if they can deal with the data their pricing is prohibitive.
- OLAP (Online Analytical Processing) data warehouses can deal with the large amounts of data, but they fail to utilize the properties of time series data. Typical time-series transformations like weighted aggregation are not supported.
   ∘ Redshift (an Amazon Web Services offering) is expensive and could only provide access times of 30 seconds for on-demand queries,
   o Snowflake (a third-party data warehouse offering) has better performance but its performance with 1-10 second latency is still not good enough.
- Time series databases often focus on recent data (last few months) and high-frequency ingest (data streams in real-time) and are a good option for real-time monitoring use-cases. They often cannot deal with the large amount of data, or their cost is too high when they can. Different time series databases were considered and ignored due to a high cost, those that are currently in operation for gas turbine data (InfluxDB) are expensive.

The invention is devised to solve the problem as above and has an object to provide a database solution that is able to store the large amount of data, provide acceptable sub-second latencies at an acceptable price point.

The problem is solved by a method comprising the features out of claim 1.

### The Mosaic Time Series Service

The storage and retrieval of time series data is solved by the Mosaic Time Series Service (MTSS). The MTSS is a suite of services and workers that run in the Amazon cloud (AWS). It monitors certain AWS cloud file storage (S3) buckets for incoming new files containing time series data, ingests the data found in the files automatically and makes the data available over a REST API (a web-based interface) for clients. Its main components are:
- Load creator (21): monitors (10_20) source S3 buckets (10) for newly uploaded files (11) (each gas turbine's daily data is uploaded in a chunk once a day). Newly discovered files are called a load,
- Ingest workers (41): read (10 40) all sensor readings from the newly found files (11) of a load, they convert the data to a highly efficient storage format (.orc file) (30) and extract necessary meta-data,
- Merge workers (42): take two .orc files (30) and merge the contents in order to reduce the number of files,
- Raw data service (60): serves time series data and meta-data based on the contents of the .orc files,
- Time series service: stateless service that gets the data from the raw data service and applies mappings and other dynamic transformations to the data (for example unit of measurement conversion). Clients connect to the time series service (60_70).

In comparison with other database technologies the MTSS:
- Stores and serves time series data significantly cheaper,
- Provides time series data and meta-data significantly faster,
- Scales costs linearly when adding more data while keeping the same performance,
- Reduces development efforts for client applications.

### Low cost

Cost is primarily driven by two factors:
- Storage of the large amount data: this is relatively low compared to other solutions, because of the excellent compression ratio,
- Server cost:
   o Ingest and merge workers can be scaled elastically, only the resources currently necessary are used and payed for,
   o The server hosting the raw data and time series service can be kept small as the service is so efficient.

Due to the efficient compression, the storage cost is typically lower (sometimes significantly lower) than the storage cost for competing solutions.

Due to the speed of the service smaller servers are enough to deal with the demand, which leads to lower server costs. The MTSS is currently hosted on a 4-core server in the AWS that costs 0.23 USD per hour. A comparable InfluxDB would need a cluster with at least 6 nodes. The small Snowflake warehouse that holds a similar amount of data costs around 8 USD per hour. Both solutions are much slower.

### Low latency

The MTSS returns results for smaller requests for raw or aggregated data (data for a few days, weeks or months) within 100 msec. Snowflake responses take at least 1 second or more for raw data. Aggregated data and meta-data requests are slower.

### Good scaling characteristics

Adding more data to the service does not influence the performance of the service:
- Adding more data sources just results in more files,
- As time passes there will be more years in the data set,
- Having more time series in a data source does not influence performance either.

As the service is so efficient there is still a lot of room to scale up to accommodate a bigger traffic.

The used AWS storage technologies (S3 and EBS) allow for storing around 80 trillion readings on a single server. The currently used data set 5 trillion readings.

### Reduced development costs for client applications

Since the MTSS can return responses for typical meta-data and data requests with very low latencies, it can support many time-series related use-cases (visualization, histograms, etc...) by serving data on-demand. For example, a value histogram over many years of data for a time series can be computed on-the-fly fast enough to provide an excellent user experience. With slower time series database solutions such a feature cannot be computed on-the-fly, which forces the client application development team to pre-calculate and store relevant histograms. Implementing such a background processing for pre-calculated histograms is significantly more expensive than performing calculations on-demand.

As the MTSS takes care of dynamic mappings, different data sources and typical transformations, application development teams do not need to write several data connectors and transformation algorithms.

Advantageous further embodiments of the invention are given in the subclaims.

Further characteristics and advantages will be more clear from the description of a number of preferred but not exclusive embodiments of a method for storing high volume, low frequency ingest time series data and retrieving same with sub-second latencies illustrated purely by way of non-limitative example in the accompanying drawings, wherein:

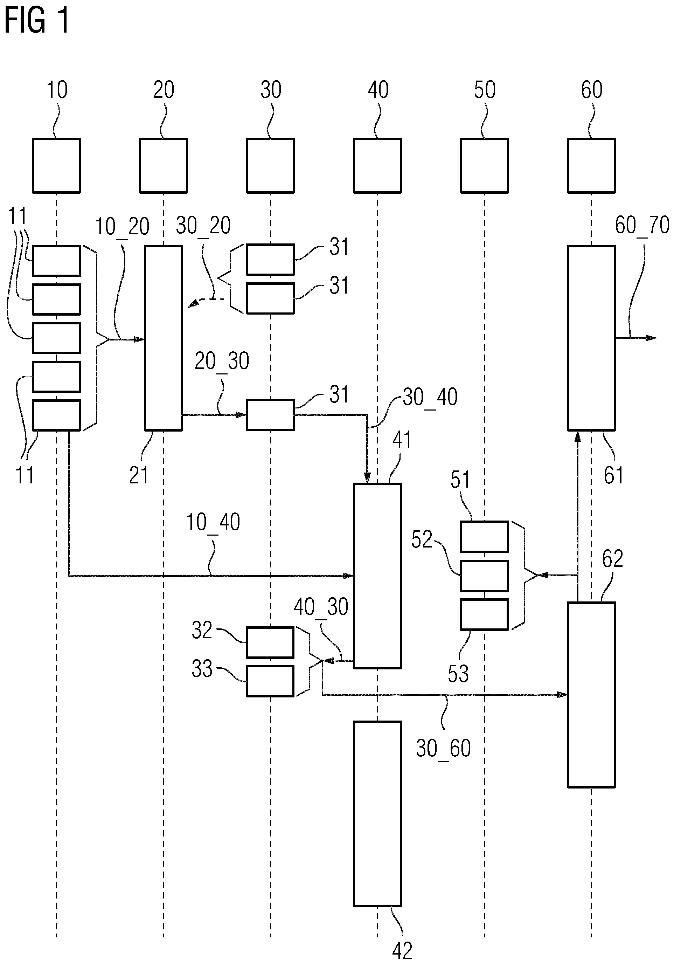

- Fig 1: shows a principle block diagram for explanation of the method of the invention and
- Fig 2: shows a table containing a typical data source and the state of the merged .orc files.

In the figures, the same designations denote the same elements.

### File storage

The time series data is grouped in three hierarchy levels:
- Provider: identifies the system or application that uploaded the data (example: wints, data is uploaded from the WinTS system)
- Data source: identifies the equipment (gas turbine) that uploads the data (example: CAITH11: data from the gas turbine Caithness 11)
- Tag: identifies a time series within the data source (example: @11MBA901CK003_XQ01, the power of the gas turbine)

The data providers upload data for a data source in files (11). One such files typically contains all data of a data source for one day. The format of the files can be anything, typically it is compressed or uncompressed csv data depending on the provider.

The ingest worker (41) converts the source files uploaded by the data provider to a more efficient file format: orc files. The resulting .orc files (32, 33) have the following hierarchy: provider / data source / year. An .orc file contains data for all tags of a data source for a given time-range within a year. There can be several files for one provider / data source / year combination.

The .orc file contains the time series data in a narrow table format with the columns: tag name, timestamp, value, unit of measure and reading quality. (Provider and data-source is not needed as that is clear from the location of the file.) Readings are sorted by tag and within a tag by timestamp. Data in the .orc file is stored in 1 MB chunks, each chunk can be read independently. The meta-data that corresponds to the contents of an .orc file is stored in a separate lmbd file format.

### Load creation (20)

To describe additions and changes in the underlying source buckets, the service uses the concept of a load. A load applies to a provider / data source / year triplet and describes a set of files that got added to the source bucket. Loads are created by a central load creator worker (21) and are numbered without gaps within the provider / data source / year triplet.

### Serving requests

Clients can ask for time series data of a time series by specifying the provider, data-source and tag and a time interval. To serve the data, the raw data service does the following steps:
- It locates the .orc files that belong to the provider and data source,
- It filters for the relevant years based on the requested time interval,
- It goes through the relevant .orc files in order, and:
   o Reads the .orc header that has information on the contents of the file,
   o Using the header information, it finds out where in the file the relevant tag's data starts,
   o Starts reading from that position,
- Readings of the tag from different .orc files are combined on the fly to form the correct response with monotonic timestamps.

The above steps can be performed very efficiently due to the following factors:
- The header of an .orc file is small and can be read quickly,
- The relevant readings in the orc files are close to each other because contents are sorted by tag and timestamp,
- Based on the header information the relevant chunk for the requested data can be determined, reading can start with the right chunk,
- The necessary disk reading (disk IO) is limited to a few MB per request (even though .orc files can be many GB large),
- The CPU work to un-compress the data is low, as only a few MB data must be uncompressed,
- All steps of the processing are performed in parallel: data is read from disk in chunks, chunks are uncompressed one by one, readings are extracted and sent to the client as they become available. Time series readings are "streaming" from disk to client end-to-end.

It is possible to perform the above steps for one .orc file within 10-40 milliseconds. The time necessary to serve a request ultimately depends on the number of .orc files that need to be processed in order to serve the requested time frame.

### Merging .orc files

To keep the service performant the key is to reduce disk IO and uncompressing work. As these depend on the number of files that need to be opened, it is key to reduce the number of files that are involved in serving requests. Without any measures a data source would upload one .csv file per day, each .csv file would get converted to an efficient .orc file and the service would end up with 365 files per year for the data source. Opening und uncompressing so many files would be inefficient.

To solve this problem the service employs merge workers (42). A merge worker looks at files of a provider / data source / year triplet and merges neighboring files into bigger files. Two .orc files are neighbors if the loads they contain are neighbors: for example, a file containing load 1-10 and a file containing load 11-17 are neighbors and can be merged into a bigger file containing load 1-17. Two files are merged only if they are of similar size. Due to this rule files get exponentially bigger during the merge process, and so any reading undergoes the merge process only about 10 times. (There are 365 days in a year, by the end of the year all data of the year is merged into one file.)

Due to the merge process, older data (till the previous year) is typically merged into one file per year. Data from the current year is typically kept in 2 to 4 separate files depending on the state of the merge process.

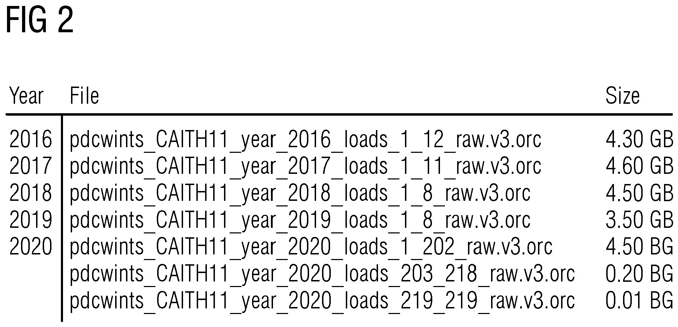

Fig 2 shows a table exhibiting a typical data source and the state of the merged .orc files.

The .orc file format is a columnar file format. This means the values of tag name, timestamp, value, unit-of-measure and quality are stored by column, not row. This enables extremely efficient compression:
- The value tag name stays constant for thousands or millions of readings (as the data is sorted by tag name), which compresses extremely well,
- Consecutive timestamps are very similar to each other (as the data is sorted by timestamp within a tag) this also compresses very well,
- Consecutive values are similar to each other, since the data typically comes from physical processes (a temperature does not change wildly from one second to the other).

On average the .orc file format with the chosen sorting results in around 5 bytes storage per time series reading. This is significantly lower than other database technologies. This directly translates to lower operational costs.

The invention thus conceived is suscetiple of numerous modifications and variations, which are all within the scope of the same inventive concept. Moreover, all the details may be replaced by other technically equivalent elements. In practice, all elements can be varied without limitation according to requirements.

### List of designations

- 10 -: source S3 bucket
- 11 -: source file
- 10_20 -: lists
- 10_40 -: reads
- 20 -: Load creation EC2 instance
- 21 -: Load creator
- 20_30 -: creates
- 30 -: ORC S3 bucket
- 31 -: load_definition.json
- 32 - _: raw.orc
- 33 - _: avg1.orc
- 30_20 -: lists
- 30_40 -: reads
- 30_60 -: reads
- 40 -: ingest auto-scaling group
- 41 -: ingester
- 42 -: merger
- 40_30 -: creates
- 50 -: Service EBS volume
- 51 -: load_definition.json
- 52 - _: raw.orc
- 53 - _: avg1.orc
- 60 -: Raw data service
- 61 -: serving over http
- 62 -: cloning
- 60_70 -: response to customer
- AWS -: Amazon Web Services, Amazon cloud
- MTSS -: Mosaic Time Series Service, which is a suite of services and workers that run in the AWS

## Claims

1. Method for storing high volume, low frequency ingest time series data and retrieving same with sub-second latencies, whereby
- providing Mosaic Time Series Service (MTSS), which is a suite of services and workers that run in the Amazon cloud (AWS),
- ingesting files containing time series data into AWS cloud file storage source S3 buckets of the Mosaic Time Series Service,
- monitoring the AWS cloud file storage source S3 buckets for incoming new files containing said time series data,
- converting said time series data found in said file storage source S3 buckets to a highly efficient storage format (.orc),
- ingesting said converted time series data into file storage ORC S3 buckets,
- making the converted time series data stored in said file storage ORC S3 buckets available over a REST API for retrieval.

2. Method according claim 1
providing a load creator for monitoring source S3 buckets for newly uploaded files.

3. Method according claim 2
providing an ingest worker for reading sensor readings from the newly found files of a load, the ingest worker converting the data to a highly efficient storage format and extracting meta-data.

4. Method according to one of the claims 1 to 3
providing a merge worker for taking two files of highly efficient storage format and merging their contents.

5. Method according claim 4
providing raw data service for serving time series data and meta-data based on the contents of the files of highly efficient storage format.

6. Method according claim 5
providing time series service for getting the data from the raw data service and applying dynamic transformations to the data.

7. Method according claim 6
applying dynamic transformations to the data comprises mappings.

8. Method according claim 7
applying dynamic transformations to the data comprises unit of measurement conversion.

9. Method according to one of the claims 1 to 8
the data of a highly efficient storage format are given in .orc file format.

10. Method according to one of the claims 1 to 9 ingesting files containing time series data as large chunks into AWS cloud file storage source S3 buckets of the Mosaic Time Series Service.
